# EUROPÄISCHE PATENTANMELDUNG

(11) **EP 1 302 699 A2**
(43) Veröffentlichungstag der Anmeldung: **16.04.2003**
(21) Anmeldenummer: 02022683.3
(22) Anmeldetag: 10.10.2002
(51) Int. Cl.: F16H 29/08

(54) **Getriebe mit stufenlos veränderbarer Übersetzung**

(30) Priorität: 15.10.2001 AT 16292001
(71) Anmelder: Heinzle, Friedrich, 6800 Feldkirch (AT)
(72) Erfinder: Nagel, Edmund Ferdinand, 6800 Feldkirch (AT)
(74) Vertreter: Hefel, Herbert, Dipl.-Ing.

(57) **Zusammenfassung**

Ein Getriebe mit veränderbarer Übersetzung umfaßt mindestens einen um eine Achse verschwenkbar gelagerten Hebel (15), der durch Drehung der Eingangswelle (1) in eine wechselweise Verschwenkbewegung in beide Verschwenkrichtungen versetzbar ist, und mindestens eine drehrichtungsabhängige Kupplungseinrichtung (3), wobei mindestens zwei Übertragungszweige des Getriebes vorgesehen sind, die wechselweise die Ausgangswelle (2) antreiben. Durch die angesteuert öffen- und schließbare drehrichtungsabhängige Kupplungseinrichtung (3) erfolgt unabhängig von der relativen Drehrichtung zwischen dem eingangsseitigen und dem ausgangsseitigen Teil (4, 5) in einer ersten Drehrichtung des eingangsseitigen Teils (4) eine Mitnahme des ausgangsseitigen Teils (5) und in der zweiten Drehrichtung des eingangsseitigen Teils (4) ein Freilauf zwischen dem eingangsseitigen Teil (4) und dem ausgangsseitigen Teil (5).

## Beschreibung

Die Erfindung betrifft ein Getriebe mit veränderbarer, insbesondere stufenlos veränderbarer, Übersetzung zwischen einer Eingangswelle und einer Ausgangswelle mit mindestens einem um eine Achse verschwenkbar gelagerten Hebel, der durch Drehung der Eingangswelle in eine wechselweise Verschwenkbewegung in beide Verschwenkrichtungen versetzbar ist, deren Frequenz der Drehfrequenz der Eingangswelle oder einem Vielfachen hiervon entspricht und deren Amplitude zur Änderung der Übersetzung veränderbar ist, und mindestens einer drehrichtungsabhängigen Kupplungseinrichtung mit einem eingangsseitigen Teil, welches von dem mindestens einen Hebel in eine wechselweise Drehbewegung in beide Drehrichtungen versetzbar ist, und einem ausgangsseitigen Teil, das mit der Ausgangswelle in Verbindung steht, wobei mindestens zwei Übertragungszweige des Getriebes vorgesehen sind, die jeweils mindestens einen verschwenkbar gelagerten, durch Drehung der Eingangswelle in eine wechselweise Verschwenkbewegung in die beiden Verschwenkrichtungen versetzbaren Hebel und eine drehrichtungsabhängige Kupplungseinrichtung aufweisen und die wechselweise die Ausgangswelle antreiben.

Bekannt sind Einrichtungen zum Umsetzen einer Drehbewegung in eine lineare hin- und hergehende Bewegung, beispielsweise aus der DE-OS 2 523 260. Weiters sind Getriebe zur Umwandlung einer hin- und hergehenden linearen Bewegung in eine Drehbewegung bekannt, beispielsweise aus der DE-PS 817 980.

Bei herkömmlichen Getrieben zur stufenlosen Änderung der Übersetzung zwischen einer Eingangswelle und einer Ausgangswelle des Getriebes werden üblicherweise reibschlüssige Kraftübertragungen eingesetzt, wodurch sich der mechanische Wirkungsgrad verringert.

Das aus der FR-PS 1,085,731 bekannte Getriebe weist einen Hebel auf, der einerseits mit einer Zahnstange verschwenkbar verbunden ist, andererseits mit einem von der Eingangswelle des Getriebes angetriebenen Exzenter in Verbindung steht. Dieses Ende des Hebels ist verschwenkbar an einer von der Eingangswelle radial abstehenden Exzenterstange festgelegt, wobei zur Verstellung der Übersetzung der radiale Abstand des Anlenkpunktes des Hebels an der Exzenterstange von der Eingangswelle verstellbar ist. Die Zahnstange, mit der das andere Ende des Hebels verschwenkbar verbunden ist, führt eine lineare hin- und hergehende Bewegung aus, wobei sie mit zwei Zahnrädern von in entgegengesetzte Richtungen wirkenden Freilaufgetrieben kämmt. Jedes der Freilaufgetriebe setzt dabei eine der beiden Bewegungsrichtungen der linearen Bewegung der Zahnstange in eine Drehbewegung um einen entsprechenden Winkelbetrag der Ausgangswelle um, wobei eine gleichsinnige Drehrichtung der Ausgangswelle vorliegt. Nachteilig bei diesem vorbekannten Getriebe ist insbesondere der diskontinuierliche, ruckweise Antrieb der Ausgangswelle.

Aus der Landwirtschaft bekannt sind weiters auf einer Ladefläche eines Anhängers vorgesehene Fördereinrichtungen zum schrittweisen Transportieren des geladenen Materials (organischer Dünger) zur rückseitig am Anhänger angeordneten Abgabevorrichtung. Eine vom Zugfahrzeug angetriebene Welle treibt einen Exzenter an, der einen Hebel in eine wechselweise Verschwenkbewegung in beide Schwenkrichtungen versetzt. Am Hebel ist eine nach Art einer Ratsche mit einem Zahnrad zusammenwirkende Klaue vorgesehen, wodurch eine Freilaufkupplung gebildet wird. Deren Ausgangswelle treibt die Fördereinrichtung schrittweise an. Durch Veränderung der Länge des wirksamen Hebelarms des Hebels (Veränderung des Angriffspunktes des Exzenters am Hebel) kann die Schrittweite verstellt werden. Die Fördereinrichtung wird bei diesem Getriebe wiederum diskontinuierlich angetrieben.

Getriebe der eingangs genannten Art sind aus der US-PS 4,182,203 und der US-PS 2,080,665 bekannt. Diese eine stufenlos veränderbare Übersetzung aufweisenden Getriebe besitzen jeweils zwei gegeneinander phasenverschobene Übertragungszweige mit Freilaufgetrieben als drehrichtungsabhängige Kupplungseinrichtungen, wobei ein relativ gleichförmiger Antrieb der Ausgangswelle erreicht wird.

Aufgabe der Erfindung ist es, ein Getriebe der eingangs genannten Art mit einem hohen Wirkungsgrad und einem relativ kontinuierlichen und gleichförmigen Antrieb der Ausgangswelle bereitzustellen, bei dem, insbesondere beim Einsatz als Fahrzeuggetriebe, weiters eine Motorbremsfunktion realisiert werden kann.

Bei einem erfindungsgemäßen Getriebe kann es auch ermöglicht werden, daß bei einem von der Eingangswelle auf die Ausgangswelle zu übertragenden Drehmoment zu jedem Zeitpunkt die Ausgangswelle über mindestens einen der Übertragungszweige angetrieben wird. Es kann dabei ein weitgehend kontinuierlicher bzw. gleichförmiger Antrieb der Ausgangswelle erreicht werden. In einer vorteilhaften Ausführungsform der Erfindung weist hierbei jeder der Übertragungszweige des Getriebes eine von der Eingangswelle angetriebene Kurvenscheibe auf, mittels welcher der oder die ver-schwenkbar gelagerten Hebel eines jeweiligen Übertragungszweiges in die wechselweise Verschwenkbewegung in die beiden Drehrichtungen versetzbar sind. Durch eine entsprechende, in der Figurenbeschreibung noch genauer erläuterte Ausgestaltung dieser Kurvenscheiben kann ein besonders gleichförmiger Antrieb der Ausgangswelle erreicht werden.

Im geschlossenen Zustand des steuerbaren Eingriffsteils kann eine kraftschlüssige, insbesondere reibschlüssige, oder eine formschlüssige Verbindung zwischen dem eingangsseitigen Teil und dem ausgangsseitigen Teil der drehrichtungsabhängigen Kupplungseinrichtung bestehen.

Das ausgangsseitige Teil der drehrichtungsabhängigen Kupplungseinrichtung kann unmittelbar auf der Ausgangswelle gelagert sein oder mit dieser über ein oder mehrere Übertragungselemente in Verbindung stehen, die insbesondere formschlüssig, beispielsweise in Form von Ritzeln ausgebildet sein können.

Weitere Vorteile und Einzelheiten der Erfindung werden im folgenden anhand desin der beiliegenden Zeichnung dargestellten Ausführungsbeispiels erläutert. In der Zeichnung zeigen:
- Fig. 1: eine schematisierte Darstellung einer Ausführungsform eines erfindungsgemäßen Getriebes;
- Fig. 2: einen Schnitt entlang der Linie A-A von Fig. 1 und
- Fig. 3: ein Diagramm der Abhängigkeit des Drehwinkels des eingangsseitigen Teils der drehrichtungsabhängigen Kupplungseinrichtung vom Drehwinkel der Eingangswelle für das in den Fig. 1 und 2 dargestellte Ausführungsbeispiel der Erfindung.

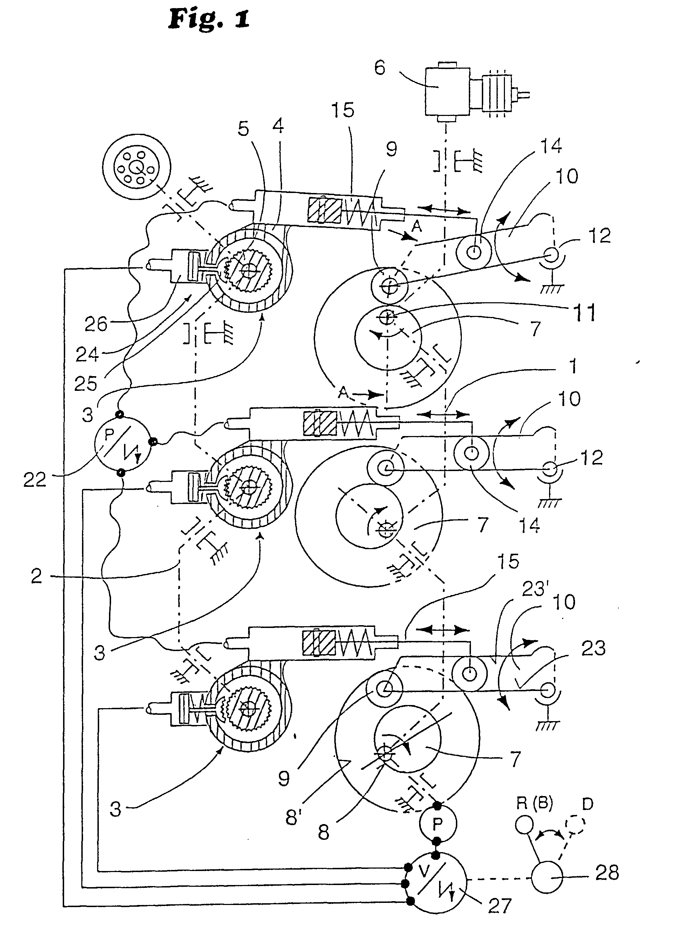

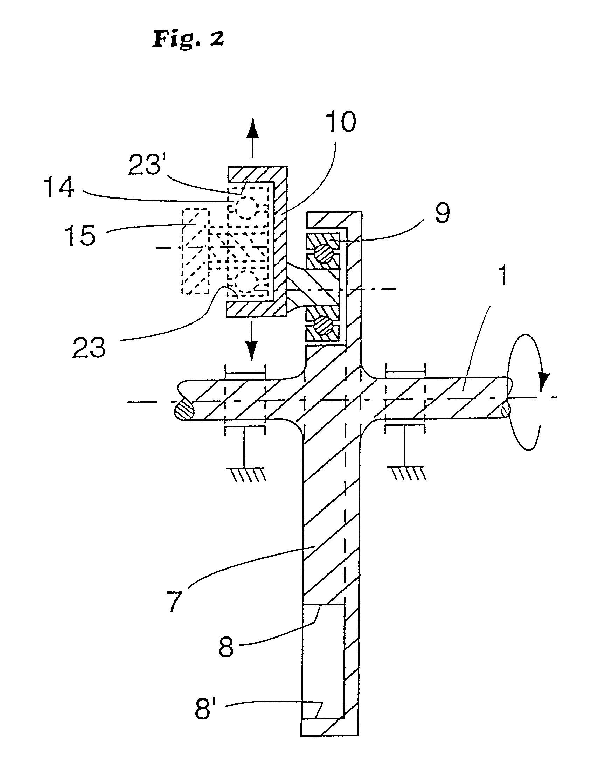

Ein Ausführungsbeispiel der Erfindung ist in den Fig. 1 und 2 dargestellt. Es sind hier drei Übertragungszweige vorgesehen, die wechselweise eine Ausgangswelle 2 antreiben. Jeder Übertragungszweig weist eine drehrichtungsabhängige Kupplungseinrichtung 3 auf.

Die ausgangsseitigen Teile 5 der Kupplungen 3 sind starr mit der drehbar gelagerten Ausgangswelle 2 verbunden und deren Drehachse bildet die Drehachsen der ausgangsseitigen Teile, über die diese (zusammen mit der Ausgangswelle 2) drehbar gelagert sind. Die Ausgangswelle 2 ist in Fig. 1 der Übersichtlichkeit halber lediglich durch eine die ausgangsseitigen Teile 5 der Kupplungen 3 verbindende strichlierte Linie dargestellt. Am Ende der Ausgangswelle 2 ist ein Fahrzeugrad eingezeichnet, was den Einsatz als Fahrzeuggetriebe symbolisieren soll. Bei der Ausgangswelle 2 kann es sich beispielsweise um die Kardanwelle eines Kraftfahrzeuges handeln.

Die Eingangswelle 1 ist ebenfalls in Form einer abgewinkelten strichlierten Linie symbolisiert. Auch hier kann es sich um eine gerade durchgehende Welle handeln. Die Eingangswelle 1 wird von einem Motor 6 angetrieben. Eine an einem um die Achse 12 verschwenkbar gelagerten Hebel 10 drehbar gelagerte Rolle 9 wirkt jeweils mit einer auf der Eingangswelle 1 angeordneten und von dieser angetriebenen doppelwirkenden Kurvenscheibe 7 zusammen, die beidseitig an der Rolle 9 anliegende Kurvenflächen 8, 8' aufweist und die Rolle 9 in beide Verschwenkrichtungen des Hebels 10 zwangsweise führt. Am Hebel 10 liegt eine Rolle 14 an, die drehbar an einem Hebel 15 gelagert ist, der starr mit dem eingangsseitigen Teil 4 der Kupplungseinrichtung 3 verbunden ist. Die am Hebel 15 gelagerte Rolle 14 liegt beidseitig an Führungsflächen 23, 23' des Hebels 10 an, wodurch der Hebel 15 vom Hebel 10 zwangsweise in seine beiden Verschwenkrichtungen geführt wird. Durch die Befestigung des Hebels 15 am eingangsseitigen Teil 4 der Kupplungseinrichtung 3, welches drehbar gelagert ist (um eine mit der Drehachse der Ausgangswelle 2 zusammenfallende Drehachse), ist der Hebel 15 verschwenkbar gelagert und dessen Schwenkachse wird von der Drehachse des eingangsseitigen Teils 4 gebildet.

Die drehrichtungsabhängige Kupplungseinrichtung 3 ist derart ausgebildet, daß bei einer Drehung des eingangsseitigen Teils 4 in die erste Drehrichtung eine Mitnahme des ausgangsseitigen Teils 5 erfolgt, und zwar unabhängig von der relativen Drehrichtung zwischen dem eingangsseitigen Teil und dem ausgangsseitigen Teil, und daß bei einer Drehung des eingangsseitigen Teils 4 in die andere Drehrichtung ein Freilauf zwischen dem eingangsseitigen Teil 4 und dem ausgangsseitigen Teil 5 erfolgt. Hierzu ist am eingangsseitigen Teil 4 ein steuerbares Eingriffsteil 24 vorgesehen, das in der geschlossenen Stellung der Kupplung drehfest mit dem ausgangsseitigen Teil 5 verbunden ist. Das Eingriffsteil 24 kann hierbei von einer Kappe 25 mit einer Innenverzahnung gebildet sein, das am freien Ende der Kolbenstange einer Kolben-Zylinder-Einheit 26 festgelegt ist. Im geschlossenen Zustand der Kupplungseinrichtung steht die Innenverzahnung der Kappe 25 mit einer Außenverzahnung des als Ritzel ausgebildeten ausgangsseitigen Teils 5 im Eingriff. Die Steuerung des Kolbens der Kolben-Zylinder-Einheit 26 erfolgt über eine Steuerungseinrichtung 27 in Abhängigkeit von der Winkelstellung der Eingangswelle 1 bzw. der jeweiligen Kurvenscheibe 7. In Abhängigkeit davon, welche der Drehrichtungen des eingangsseitigen Teils 4 auf das ausgangsseitige Teil 5 übertragen wird und in welcher ein Freilauf erfolgt, ist bei der Erfindung auch ein Rückwärtsgang der Ausgangswelle realisierbar. Die Übersetzung des Getriebes bzw. der Vorwärts- oder Rückwärtsgang ist über die auf die Steuereinrichtungen 22, 27 wirkende Stelleinrichtung 28 wählbar.

Anstelle der gezeigten offen- und schließbaren Kupplung könnten auch andere mechanisch, hydraulisch, pneumatisch oder elektrisch angesteuerte Kupplungen vorgesehen werden, die geöffnet und geschlossen werden können, wobei solche Kupplungen zur Vermeidung von Verlusten im geschlossenen Zustand möglichst schlupffrei ausgebildet sein sollen, vorzugsweise formschlüssig schließbar sind.

Durch die Drehung der Kurvenscheibe 7, deren Kurvenflächen 8, 8' Bereiche mit unterschiedlichem Abstand vom Mittelpunkt 11 der Kurvenscheibe aufweist, wird der Hebel 10, der um die Achse 12 verschwenkbar gelagert ist, in eine wechselweise Verschwenkbewegung in beide Verschwenkrichtungen versetzt, wie dies durch den Doppelpfeil 13 angedeutet ist. Die Kurvenscheibe 7 und die Rolle 9 bilden eine Art Kurvengetriebe. Prinzipiell denkbar und möglich, obwohl weniger bevorzugt, wäre auch eine gleitende Anlage des Hebels 10 an den Kurvenflächen 8, 8' der Kurvenscheibe 7. Bei einer Verschwenkung des Hebels 10 in die vom Mittelpunkt 11 der Kurvenscheibe 7 wegweisende Richtung (in Fig. 1 im Uhrzeigersinn) erfolgt eine entsprechende Verschwenkung des Hebels 15, die bei der in Fig. 1 dargestellten Anordnung in die gegengleiche Verschwenkrichtung erfolgt. Durch die Verschwenkung des Hebels 15 wird das eingangsseitige Teil 4 entsprechend verdreht. Diese Drehrichtung wird in der Folge als erste Drehrichtung bezeichnet. In einem Bereich der Kurvenfläche 8, in welchem sich ihr Abstand gegenüber dem Mittelpunkt 11 verringert, d.h. ihr Radius verkleinert, erfolgt eine Verschwenkung der Hebel 10 und 15 in die jeweils gegensinnigen Schwenkrichtungen. Es erfolgt dabei eine Drehung des eingangsseitigen Teils 4 in die gegenläufige Drehrichtung (im Uhrzeigersinn in Fig. 1 gesehen), die in der Folge als zweite Drehrichtung bezeichnet wird.

Die Amplitude der Verschwenkbewegung des Hebels 15 bzw. der Verdrehbewegung des eingangsseitigen Teils 4 in die beiden Richtungen hängt vom Angriffspunkt des Hebels 15 am Hebel 10 ab (statt einer Rolle 14 wäre hier wiederum eine gleitende Lagerung prinzipiell denkbar und möglich). Von der Lage dieses Angriffspunktes hängt das Verhältnis zwischen dem eingangsseitigen und dem ausgangsseitigen Hebelarm dieses einarmigen Hebels 10 ab. Weiters hängt die Amplitude von der wirksamen Länge des Hebels 15 ab. Durch eine synchrone Änderung der Längen der Hebel 15, durch die gleichzeitig auch das Verhältnis zwischen eingangs- und ausgangsseitigem Hebelarm der Hebel 10 geändert wird, kann die Übersetzung des Getriebes stufenlos geändert werden. Der Hebel 15 kann dazu beispielsweise, wie dies in Fig. 1 schematisch angedeutet ist, teleskopierbar in Form einer von der Steuerungseinrichtung 22 angesteuerten Kolben-Zylinder-Einheit ausgebildet sein. Beispielsweise könnte auch die Rolle 14 an einem Schlitten angeordnet sein, der verschiebbar an einer den Hebel 15 bildenden Führungsschiene gelagert ist.

Durch Veränderung der Länge des Hebels 15 derart, daß die Rolle 14 auf dem Hebel 10 im Bereich von dessen Achse 12 zu liegen kommt, wird die Amplitude der Verschwenkbewegung des Hebels 15 auf Null reduziert, wodurch ein Leergang bereitgestellt werden kann.

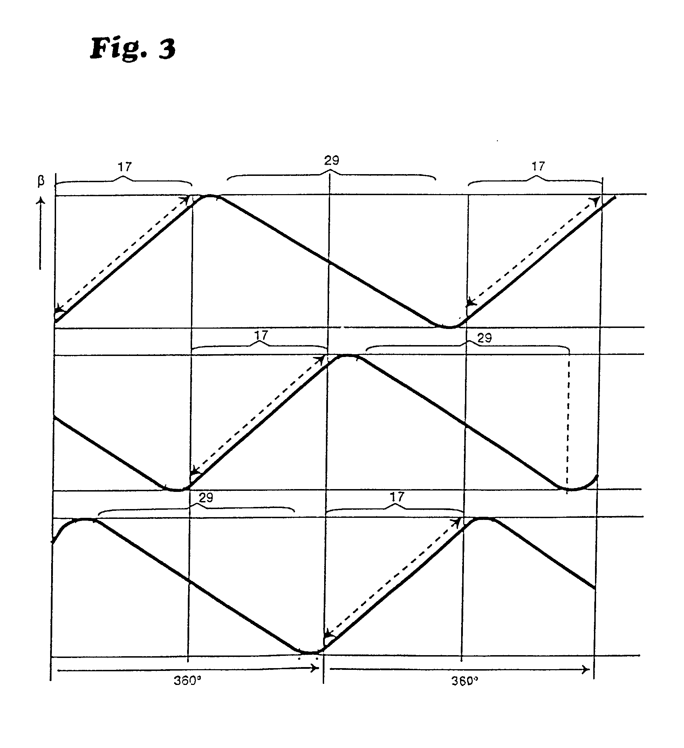

Die drei Übertragungszweige des Getriebes wirken wechselweise auf die Ausgangswelle 2, wie dies im folgenden anhand von Fig. 3 näher erläutert wird. Als horizontale Achse ist hier der Drehwinkel α der Eingangswelle 1 eingetragen. Die drei Diagramme stellen jeweils einen der Übertragungszweige dar. In senkrechter Richtung ist der Drehwinkel β des jeweiligen eingangsseitigen Teils 4 der Kupplungseinrichtung 3 eingetragen. Wie aus den Diagrammen ersichtlich ist, sind die Winkelgeschwindigkeiten der eingangsseitigen Teile 4 jeweils über einen Winkelbereich 17 der Eingangswelle 1 annähernd konstant (diese Konstante ist in den Übertragungszweigen gleich groß). Eine konstante Drehgeschwindigkeit der Eingangswelle und eine gleichbleibende Übersetzung des Getriebes ist hierbei vorausgesetzt. Dieser Winkelbereich 17 ist in den einzelnen Übertragungszweigen gegeneinander versetzt und über eine vollständige Umdrehung der Eingangswelle befindet sich bei jedem Drehwinkel α der Eingangswelle zumindest eines der eingangsseitigen Teile 4 in einem solchen Winkelbereich 17. Falls die Kurvenfläche der Kurvenscheibe entlang des Umfangs der Kurvenscheibe nur ein Maximum bezogen auf ihren Radius aufweist (eine "Nocke"), so beträgt ein jeweiliger Winkelbereich 17 somit mindestens 120° (bei drei Übertragungszweigen).

Über den Winkelbereich 17 der Eingangswelle 1 bzw. der zugehörigen Kurvenscheibe 7 nimmt der Radius der Kurvenfläche 8, d.h. ihr Abstand vom Mittelpunkt 11, stetig zu. Diese Zunahme weicht aber vom linearen Verlauf ab. Dies deshalb, da es bei den Verschwenkungen der Hebel 19 und 15 zu einer Veränderung des Angriffspunktes des Hebels 15 am Hebel 10 kommt, wodurch eine hin- und hergehende Abrollbewegung der Rolle 14 auf dem Hebel 10 resultiert. Eine lineare Zunahme des Radius der Kurvenfläche würde somit zu einer gewissen Ungleichförmigkeit des Antriebs der Ausgangswelle 2 führen, die bevorzugterweise durch eine entsprechend korrigierte Kurvenfläche 8 der Kurvenscheibe 7 ausgeglichen wird.

Günstigerweise erfolgt das Schließen einer jeweiligen Kupplungseinrichtung zu einem Zeitpunkt, wenn das eingangsseitige und ausgangsseitige Teil die gleiche Drehgeschwindigkeit aufweisen (zu Beginn des Winkelbereichs 17).

Das beschriebene erfindungsgemäße Getriebe arbeitet insgesamt somit quasi formschlüssig.

Die Winkelbereiche 17, innerhalb derer die Drehgeschwindigkeiten der jeweiligen eingangsseitigen Teile 4 konstant sind, können in den einzelnen Zweigen unmittelbar aneinander anschließen oder es können auch gewisse Überlappungen vorgesehen sein.

In die zweite Drehrichtung sind ebenfalls Winkelbereiche 29 mit konstanten Winkelgeschwindigkeiten der eingangsseitigen Teile 4 der einzelnen Übertragungszweige vorgesehen.

Da ein Überholen des eingangsseitigen Teils 4 durch das ausgangsseitige Teil 5 bei geschlossenem Eingriffsteil 24 beim Getriebe der Erfindung nicht möglich ist, wird eine Motorbremsfunktion erreicht.

Anstelle eines einarmigen Hebels 10 könnte auch ein zweiarmiger Hebel vorgesehen sein. Weitere Übertragungselemente in jedem Übertragungszweig wären ebenfalls denkbar und möglich, insbesondere in Form von formschlüssigen Übertragungselementen, wie beispielsweise weitere Hebel, aber auch Ritzel o. dgl.

Grundsätzlich wäre es auch denkbar und möglich, in einem jeweiligen Übertragungszweig lediglich einen einzigen Hebel vorzusehen. Beispielsweise könnte durch eine Verschiebung der Eingangswelle der Berührungspunkt der Kurvenscheibe mit dem Hebel 15 und somit der wirksame Hebelarm des Hebels 15 verändert werden.

Weiters wäre es grundsätzlich auch denkbar und möglich, eine Änderung der Übersetzung ohne Veränderung der Länge zumindest eines Hebelarmes zu erzielen. Hierzu könnte beispielsweise eine Kurvenscheibe vorgesehen sein, die in achsialer Richtung eine gewisse Ausdehnung aufweist, wobei sich ihre Querschnittsfläche in achsialer Richtung kontinuierlich und kongruent vergrößert bzw. verkleinert. Die Änderung der Übersetzung würde hierbei durch achsiale Verschiebung der Kurvenscheibe gegenüber dem an sie anliegenden Hebel erfolgen.

Prinzipiell denkbar und möglich wäre es auch, mehrere Kurvenscheiben pro Übertragungszweig vorzusehen. Eine jeweilige Kurvenscheibe kann ein oder mehrere Maxima ihres Radius, d.h. ein oder mehrere Nocken aufweisen.

Anstelle einer stufenlosen Änderung der Übersetzung wäre es prinzipiell auch denkbar und möglich, eine schrittweise Änderung der einstellbaren Übersetzungen vorzusehen.

Falls ein erfindungsgemäßes Getriebe so ausgebildet ist, daß noch gewisse Unförmigkeiten des Antriebs der Ausgangswelle vorliegen, könnte in der Ausgangswelle auch eine Einrichtung zur Glättung solche Unförmigkeiten insbesondere in Form eines oder mehrerer in der Ausgangswelle angeordneter Torsionsfederelemente vorgesehen sein.

Bei einer Verwendung eines erfindungsgemäßen Getriebes als Fahrzeuggetriebe könnte den Rädern einer angetriebenen Achse oder im Falle eines Allradantriebes allen Rädern jeweils ein eigenes Getriebe zugeordnet werden. Auf diese Weise könnte auch in einfacher Weise die Funktion eines Differentials erreicht werden, so daß ein separates Differential entfallen könnte.

### Legende

### zu den Hinweisziffern:

- 1: Eingangswelle
- 2: Ausgangswelle
- 3: drehrichtungsabhängige Kupplungseinrichtung
- 4: eingangsseitiges Teil
- 5: ausgangsseitiges Teil
- 6: Motor
- 7: Kurvenscheibe
- 8, 8': Kurvenfläche
- 9: Rolle
- 10: Hebel
- 11: Mittelpunkt
- 12: Achse
- 14: Rolle
- 15: Hebel
- 17: Winkelbereich
- 21: Verriegelungselement
- 22: Steuerungseinrichtung
- 23, 23': Führungsfläche
- 24: Eingriffsteil
- 25: Kappe
- 26: Kolben-Zylinder-Einheit
- 27: Steuerungseinrichtung
- 28: Stelleinrichtung
- 29: Winkelbereich

## Patentansprüche

1. Getriebe mit veränderbarer, insbesondere stufenlos veränderbarer, Übersetzung zwischen einer Eingangswelle (1) und einer Ausgangswelle (2) mit mindestens einem um eine Achse verschwenkbar gelagerten Hebel (15), der durch Drehung der Eingangswelle (1) in eine wechselweise Verschwenkbewegung in beide Verschwenkrichtungen versetzbar ist, deren Frequenz der Drehfrequenz der Eingangswelle oder einem Vielfachen hiervon entspricht und deren Amplitude zur Änderung der Übersetzung veränderbar ist, und mindestens einer drehrichtungsabhängigen Kupplungseinrichtung (3) mit einem eingangsseitigen Teil (4), welches von dem mindestens einen Hebel (15) in eine wechselweise Drehbewegung in beide Drehrichtungen versetzbar ist, und einem ausgangsseitigen Teil (5), das mit der Ausgangswelle (2) in Verbindung steht, wobei mindestens zwei Übertragungszweige des Getriebes vorgesehen sind, die jeweils mindestens einen verschwenkbar gelagerten, durch Drehung der Eingangswelle (1) in eine wechselweise Verschwenkbewegung in die beiden Verschwenkrichtungen versetzbaren Hebel (15) und eine drehrichtungsabhängige Kupplungseinrichtung (3) aufweisen und die wechselweise die Ausgangswelle (2) antreiben, **dadurch gekennzeichnet, daß** eine angesteuert offen- und schließbare drehrichtungsabhängige Kupplungseinrichtung (3) vorgesehen ist, wobei unabhängig von der relativen Drehrichtung zwischen dem eingangsseitigen und dem ausgangsseitigen Teil (4, 5) in einer ersten Drehrichtung des eingangsseitigen Teils (4) eine Mitnahme des ausgangsseitigen Teils (5) und in der zweiten Drehrichtung des eingangsseitigen Teils (4) ein Freilauf zwischen dem eingangsseitigen Teil (4) und dem ausgangsseitigen Teil (5) erfolgt.

2. Getriebe nach Anspruch 1, **dadurch gekennzeichnet, daß** jeder Übertragungszweig des Getriebes mindestens eine von der Eingangswelle (1) angetriebene Kurvenscheibe (7) aufweist, mittels welcher der oder die verschwenkbar gelagerten Hebel (10, 15) eines jeweiligen Übertragungszweiges in eine wechselweise Verschwenkbewegung in die beiden Schwenkrichtungen versetzbar sind.

3. Getriebe nach 1 oder Anspruch 2, **dadurch gekennzeichnet, daß** zur Änderung der Übersetzung des Getriebes ein Hebelarm von zumindest einem Hebel (10, 15) in einem jeweiligen Übertragungszweig veränderbar ist.

4. Getriebe nach Anspruch 3, **dadurch gekennzeichnet, daß** zur Bereitstellung eines Leerganges ein Hebelarm von zumindest einem Hebel (10, 15) in einem jeweiligen Übertragungszweig auf 0 setzbar ist.

5. Getriebe nach Anspruch 3 oder Anspruch 4, **dadurch gekennzeichnet, daß** jeder Übertragungszweig zumindest einen erster Hebel (10), auf den die Kurvenscheibe (7) unmittelbar wirkt und der von dieser in eine wechselweise Verschwenkbewegung in die beiden Schwenkrichtungen versetzbar ist, und einen zweiten Hebel (15) aufweist, der vom ersten Hebel (10) in eine wechselweise Verschwenkbewegung in die beiden Schwenkrichtungen versetzbar ist und der das drehbar gelagerte Eingangsteil (4) der Kupplungseinrichtung (3) im Sinne einer wechselweisen Drehbewegung in die beiden Drehrichtungen antreibt.

6. Getriebe nach einem der Ansprüche 1 bis 5, **dadurch gekennzeichnet, daß** der Hebel (10), auf den die Kurvenscheibe (7) unmittelbar wirkt, um eine stationäre Achse (12) verschwenkbar gelagert ist.

7. Getriebe nach einem der Ansprüche 1 bis 6, **dadurch gekennzeichnet, daß** am Hebel (10), auf den die Kurvenscheibe unmittelbar wirkt, eine Rolle (9) drehbar gelagert ist, die auf der Kurvenfläche (8, 8') der Kurvenscheibe (7) abrollt.

8. Getriebe nach einem der Ansprüche 1 bis 7, **dadurch gekennzeichnet, daß** die Kurvenscheiben (7) jeweils doppelwirkende Kurvenflächen (8, 8') aufweisen, die den Hebel, auf den die Kurvenscheibe unmittelbar wirkt, in die beiden Verschwenkrichtungen zwangsweise führen.

9. Getriebe nach Anspruch 8, **dadurch gekennzeichnet, daß** mehrere weitere Übertragungsglieder im Übertragungsweg eines jeweiligen Übertragungszweiges in beide Drehrichtungen oder Verschwenkrichtungen durch das jeweils vorausgehende Übertragungsglied zwangsweise geführt sind.

10. Getriebe nach einem der Ansprüche 1 bis 9, **dadurch gekennzeichnet, daß** die drehrichtungsabhängige Kupplungseinrichtung (3) ein steuerbares Eingriffsteil (24) aufweist, mittels dem in der geschlossenen Stellung der Kupplungseinrichtung (3) eine drehfeste Verbindung zwischen dem eingangsseitigen und dem ausgangsseitigen Teil (4, 5) erfolgt, wobei die Ansteuerung des Eingriffsteils (24) in Abhängigkeit vom Drehwinkel der Eingangswelle (1) erfolgt.

11. Getriebe nach Anspruch 10, **dadurch gekennzeichnet, daß** die Verbindung zwischen dem eingangsseitigen Teil (4) und dem ausgangsseitigen Teil (5) im geschlossenen Zustand der Kupplungseinrichtung (3) kraft- oder formschlüssig ausgebildet ist.

12. Getriebe nach Anspruch 10 oder Anspruch 11, **dadurch gekennzeichnet, daß** das steuerbare Eingriffsteil (24) am eingangsseitigen Teil (4) vorgesehen ist und in der geschlossenen Stellung der Kupplung drehfest mit dem ausgangsseitigen Teil (5) verbunden ist.

13. Getriebe nach einem der Ansprüche 1 bis 12, **dadurch gekennzeichnet, daß** die drehrichtungsabhängige Kupplungseinrichtung (3) mechanisch, hydraulisch, pneumatisch oder elektrisch angesteuert offen- und schließbar ist.
